# EUROPEAN PATENT APPLICATION

(11) **EP 2 733 055 A1**
(43) Date of publication of application: **21.05.2014**
(21) Application number: 13192981.2
(22) Date of filing: 14.11.2013
(51) Int. Cl.: B62K 3/00, B62J 33/00

(54) **Scooter mittens**

(30) Priority: 14.11.2012 GB 201220500; 10.09.2013 GB 201316072
(71) Applicant: ZPM Limited, Shaftesbury Dorset SP7 0QB (GB)
(72) Inventor: Phayre-Mudge, Zoe, Shaftesbury, Dorset SP7 0QB (GB)
(74) Representative: Schlich, George

(57) **Abstract**

A single-piece accessory for a scooter (10) with a T-shaped handlebar having a cross-bar and an upright, comprises two mittens (12, 14) joined together by a cross-piece (20), wherein:
the mittens have rearwards-facing hand-openings (22, 24) for a user and side openings (26, 28) so the accessory can be placed onto the cross-bar, frontwards portions of the mittens and the cross-piece forming a pocket that envelops the crossbar;
the mittens comprise releasable fasteners to close the side openings which when fastened secure the accessory to the handlebar.

## Description

### Field

The present invention relates to mittens for scooters.

### Background

Riding bicycles and scooters is a popular activity for young and old alike. It's an all weather activity, so riding when it is cold is common and can be made more comfortable by the rider wearing gloves. It is known to provide mittens that attach to scooter handles and are similar to the mittens available for bicycles and motorbikes.

The scooter handlebar is typically a simple T-bar and so the mittens hang down, with hand openings towards the floor. A problem is once one hand is in the first mitten it is slightly harder to get the second hand into its mitten because of the angle of the opening. Small children in particular can find it tricky to put the first and especially the second mitten on as a result.

An object of the invention is to provide mittens to be used with a scooter, and to provide scooter mittens that represent at least an alternative to the above. An object of embodiments of the invention is to provide scooter mittens that represent an improvement on known mittens.

### Invention

Accordingly, the invention provides a single piece accessory for a scooter with a T-shaped handlebar having a cross-bar and an upright, comprising two mittens joined together by a cross-piece, wherein:
the mittens have rearwards-facing hand-openings for a user;
frontwards portions of the mittens and the cross-piece form a pocket that envelops the cross-bar;
there is an opening on at least one mitten that can be opened to allow the accessory to be placed onto the cross-bar; and
the accessory comprises at least one releasable fastener to close the opening and secure the accessory to the handlebar.

The opening can be a side opening or slit along an inner side of one mitten adjacent the upright in use. An advantage is that if the opening comes undone during use then the opening is facing inwards and the outwards portion of the user's hand remains protected by the outer side of the mitten portion of the accessory.

An accessory of an embodiment of the invention described in more detail below is a single piece accessory for a scooter with a T-shaped handlebar having a cross-bar and an upright, comprising two mittens joined together by a cross-piece, wherein:
the mittens have rearwards-facing hand-openings for a user and side openings so the accessory can be placed onto the cross-bar, frontwards portions of the mittens and the cross-piece forming a pocket that envelops the cross-bar;
the mittens comprise releasable fasteners to close the side openings which when fastened secure the accessory to the handlebar.

The side openings of this embodiment can be slits; these are suitably along inner sides of the mittens adjacent the upright in use. Hence, opening these slits opens out the pocket to facilitate placing it onto and around the cross-bar from the front of the scooter towards the rear of the scooter. Having openings on both sides is an advantage, as with the accessory having a single opening the pre-closed mitten (not having the opening) has to be threaded onto the handlebar.

To put the accessory onto the scooter it is opened and can then be placed onto the cross bar with the side openings or opening in an open position and then the openings or opening are closed around the cross bar. This secures the accessory to the handlebar. In embodiments of the invention, the accessory is adapted so that closing the fastener or fasteners forms and tightens the pocket around the cross-bar, thus gripping the handlebar. This gripping may only be gentle but has been found sufficient to hold the openings up and towards the user - facilitating putting hands into the openings.

Also provided by the present invention is an accessory for a scooter with a T-shaped handlebar having a cross-bar and an upright, comprising two mittens joined together by a cross-piece, wherein:
the mittens have rearwards-facing hand-openings for a user;
frontwards portions of the mittens and the cross-piece form a pocket that envelops the cross-bar;
there is an opening on at least one mitten that can be opened to allow the accessory to be placed onto the cross-bar; and
the accessory comprises at least one releasable fastener to close the opening,
and wherein closing the fastener causes the pocket to tighten around and grip the cross-bar so that the hand-openings can be held up and towards the user.

Further provided by the invention is an accessory for a scooter with a T-shaped handlebar having a cross-bar and an upright, comprising two mittens joined together by a cross-piece, wherein:
the mittens have rearwards-facing hand-openings for a user and side openings so the accessory can be placed onto the cross-bar, frontwards portions of the mittens and the cross-piece forming a pocket that envelops the cross-bar;
the mittens comprise releasable fasteners to close the side openings which when fastened tighten the pocket around and grip the cross-bar so that the hand-openings are held up and towards the user. The side openings are suitably slits along inner sides of the mittens adjacent the upright in use.

A variety of fasteners are suitable for accessories of the invention. In an embodiment described below a hook and loop fastener is used.

Material for the accessory can optionally be waterproof and/or windproof. It can be lined inside to increase comfort and/or warmth. It can comprise elasticated material; it can be partially or wholly elasticated. Generally, stiffness or rigidity in the material helps the accessory, when fastened, grip the cross-bar sufficiently for it to hold in place. This gripping can be enhanced using elastic material.

Material for all or part of the accessory can also separately be reflective or high-visibility. As the accessory holds itself in place a strip of such material, e.g. on the front of the accessory, will generally be in a known position with respect to other road users with lights.

A lining on the inside of the pocket is optionally provided that engages with and grips the cross-bar. This helps hold the mitten openings up and towards the user. This additionally helps in embodiments of the invention wherein closing the pockets has the effect of slightly tightening the pocket around the handlebar. This can be separate from an inner mitten lining for warmth and/or comfort and can be specifically provided for the purpose of increasing grip on the cross-bar.

Known mittens are provided as two individual items, one for each side of the cross-bar. The accessory of the invention is advantageously a single piece. In a pair of mittens one is often lost. The two-mittens but single piece accessory of the invention can avoid that or reduce the risk. The invention thus provides an accessory which advantageously incorporates two mittens in a single accessory.

Known mittens tend to flop down but the accessory provided herein grips the cross-bar and can hold them up, with openings conveniently angled for ease of putting hands into the openings. Rigidity in the materials also assists - as when one hand in inside one mitten this helps hold up the other side (as the mittens are part of a single piece).

In the invention, those parts of the accessory into which the hands are placed, and which provide protection for the hands, e.g. warmth, wind cover, are referred to as mittens or mitten portions. The accessory comprises two hand-openings, one on each side, for the user's hands, forming the mittens. Generally in use the user's fingers go over the handle inside the mitten and the thumb goes under the handle. The hand holds the handle in the usual way with the mitten over the top. The accessory thus comprises two hand-openings in a single piece accessory and may hence also be referred to as comprising two muffs or muff portions - in the context of the invention both terms are appropriate.

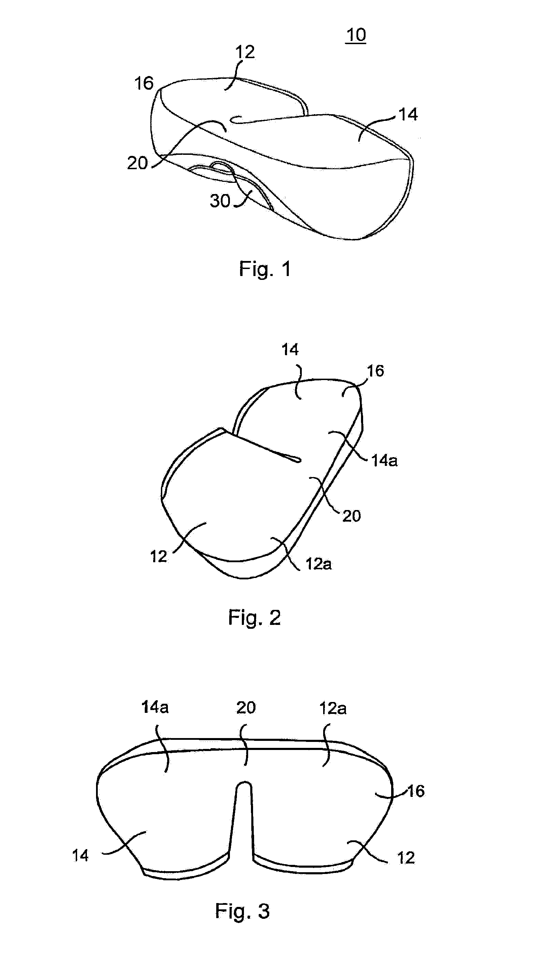

A specific embodiment of the invention is now described in detail with reference to the accompanying drawings in which:-
Fig. 1 shows a view from the top and right of scooter mittens according to a specific embodiment of the invention;
Fig. 2 shows a view from the top and left of the mittens of Fig. 1;
Fig. 3 shows a view from the top and front of the mittens of Fig. 1;

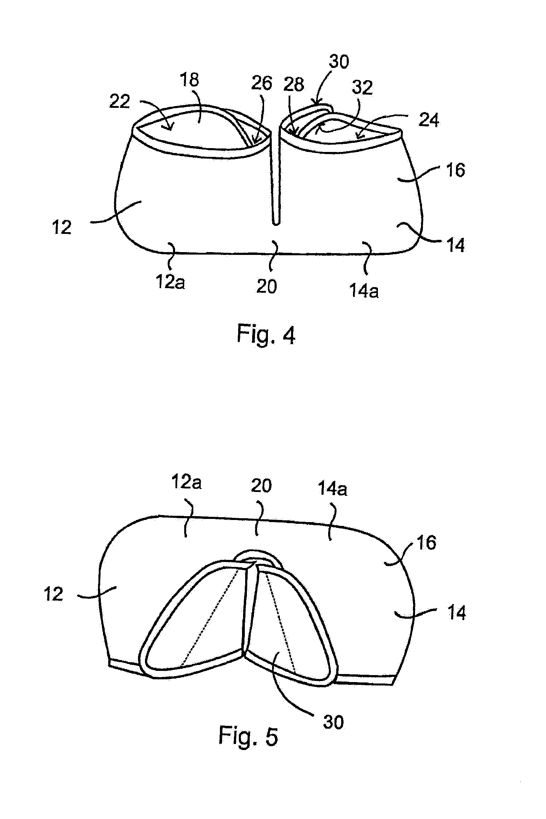

Fig. 4 shows a view from the top and rear of the mittens of Fig. 1;
Fig. 5 shows a view from below of the mittens of Fig. 1;
Fig. 6 shows a view from the top and right of the mittens of Fig. 1 fitted onto the cross-bar of a T-shaped scooter handlebar; and
Fig. 7 shows a view from the right of the mittens of Fig. 1 fitted onto the cross-bar of a T-shaped scooter handlebar.

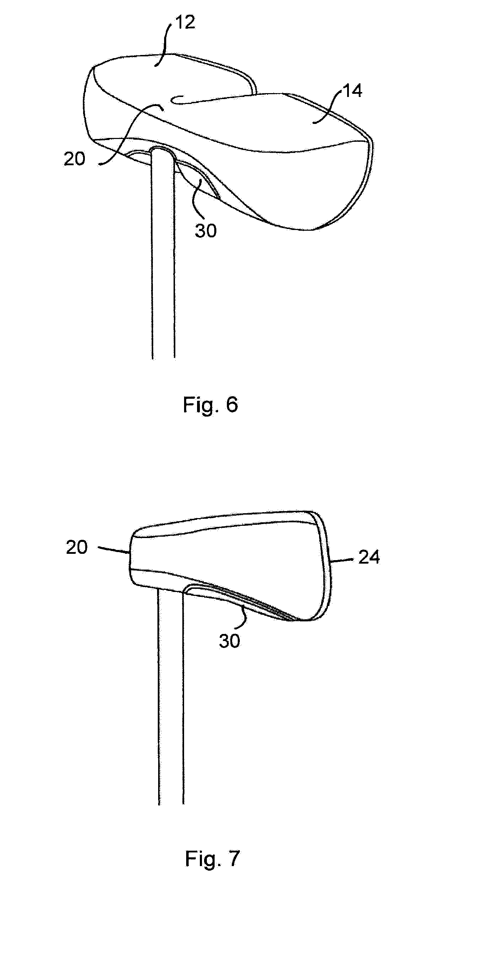

Referring to all figures, an accessory (10) incorporating mittens (12, 14) is adapted to fit onto and grip, when fastened, the cross-bar (shown in Figs. 6 and 7 only) of a T-shaped scooter handlebar.

Outer material (16) of the body of the accessory is waterproof and windproof and an inner lining (18) is furry and designed to be warm and comfortable to the hands of the wearer / user. There are two mittens (12, 14), side by side, linked by a cross-piece (20) of the material. The accessory is thus one-piece and not two separate mittens.

Each mitten portion has a hand-opening (22, 24) which when attached to the scooter can face towards the wearer / user. Each mitten also has a slitted side-opening (26, 28) adjacent to the middle of the accessory. The mittens lie in use either side of the handlebar upright, so the slits are on the inner edges. The mittens are each closed by overlapping flaps (30, 32) fastened by a hook and loop fastener (e.g. Velcro ®) located on the underside of the bottom flap (30) and the outer side of the other flap (32). Use of this fastener enables the accessory to be quickly and easily closed and opened. Other fasteners, such as poppers or a zip fastener are also suitable.

To fit the accessory, the flaps are pulled apart from each other and the side slits are opened, opening the pocket formed by the cross-piece and respective upper portions (12a, 14a) of the mittens. The accessory can then be fitted onto the cross-bar, with the cross-bar loose in the pocket. The flaps are pulled towards each other and closed. As the accessory is a good fit to the cross-bar and the material has some rigidity, this action pulls the pocket tighter around the cross-bar, increasing its grip. The accessory is shaped to fit snug around the curve of both the upright in the T bar of the scooter and the cross-bar (Figs. 6 and 7). The flaps are then fastened and when both are fastened there is sufficient grip between the cross-bar and the inner surfaces of the pocket that the mittens do not simply slip and rotate with respect to the cross-bar so as to hang down but are held up and outwards through the rigidity of the material with the mittens directed at least partially towards the wearer / user and importantly with the hand-openings towards the wearer / user (Figs. 6 and 7). It is then easy for hands to be placed into the openings as the accessory can be fitted so that these are slightly raised and are held up rather than hanging down.

Material of the body is optionally in addition elasticated, and can be pulled tightly into place against its elastic resistance when the flaps are closed are fastened.

The invention thus provides an accessory (10) incorporating scooter mittens (12, 14), and uses thereof.

## Claims

1. A single piece accessory for a scooter (10) with a T-shaped handlebar having a cross-bar and an upright, comprising two mittens (12, 14) joined together by a cross-piece (20), wherein:
the mittens have rearwards-facing hand-openings (22, 24) for a user;
frontwards portions of the mittens and the cross-piece form a pocket that envelops the cross-bar;
there is an opening (26, 28) on at least one mitten that can be opened to allow the accessory to be placed onto the cross-bar; and
the accessory comprises a releasable fastener to close the opening and secure the accessory to the handlebar.

2. An accessory according to claim 1, wherein the opening is a side opening or slit along an inner side of one mitten adjacent the upright in use.

3. A single piece accessory for a scooter with a T-shaped handlebar having a cross-bar and an upright, comprising two mittens joined together by a cross-piece, wherein:
the mittens have rearwards-facing hand-openings for a user and side openings so the accessory can be placed onto the cross-bar, frontwards portions of the mittens and the cross-piece forming a pocket that envelops the cross-bar;
the mittens comprise releasable fasteners to close the side openings which when fastened secure the accessory to the handlebar.

4. An accessory according to claim 3, wherein the side openings are slits along inner sides of the mittens adjacent the upright in use.

5. An accessory for a scooter with a T-shaped handlebar having a cross-bar and an upright, comprising two mittens joined together by a cross-piece, wherein:
the mittens have rearwards-facing hand-openings for a user;
frontwards portions of the mittens and the cross-piece form a pocket that envelops the cross-bar;
there is an opening on at least one mitten that can be opened to allow the accessory to be placed onto the cross-bar; and
the accessory comprises at least one releasable fastener to close the opening,
and wherein closing the fastener causes the pocket to tighten around and grip the cross-bar so that the hand-openings can be held up and towards the user.

6. An accessory for a scooter with a T-shaped handlebar having a cross-bar and an upright, comprising two mittens joined together by a cross-piece, wherein:
the mittens have rearwards-facing hand-openings for a user and side openings so the accessory can be placed onto the cross-bar, frontwards portions of the mittens and the cross-piece forming a pocket that envelops the cross-bar;
the mittens comprise releasable fasteners to close the side openings which when fastened tighten the pocket around and grip the cross-bar so that the hand-openings are held up and towards the user.

7. An accessory according to claim 6, wherein the side openings are slits along inner sides of the mittens adjacent the upright in use.

8. An accessory according to any preceding claim, wherein the accessory can be placed onto the cross bar with the side openings or opening in an open position and then the openings or opening closed around the cross bar to form and tighten the pocket around the cross-bar.

9. An accessory according to any preceding claim, comprising elasticated material.

10. An accessory according to any previous claim, comprising a lining on the inside of the pocket that engages with and grips the cross-bar when the accessory is secured to the cross-bar.

11. A scooter comprising an accessory according to any previous claim.
